# Europäisches Patentamt
# European Patent Office
# Office européen des brevets

(11) Publication number: **0 097 818**
**B1**

(12) **EUROPEAN PATENT SPECIFICATION**

(45) Date of publication of patent specification: **23.09.87**

(51) Int. Cl.⁴: **G 06 F 15/20**

(21) Application number: **83105169.3**

(22) Date of filing: **25.05.83**

(54) Spelling verification method and typewriter embodying said method.

(30) Priority: **30.06.82 US 393836**

(43) Date of publication of application:
**11.01.84 Bulletin 84/02**

(45) Publication of the grant of the patent:
**23.09.87 Bulletin 87/39**

(84) Designated Contracting States:
**DE FR GB IT**

(56) References cited:
**GB-A-1 572 709**
**US-A-4 136 395**
**US-A-4 250 560**

**COMMUNICATIONS OF THE ACM, Vol. 23, no.
12, December 1980, pages 676 - 687, New York
(US), J.L. PETERSON: "Computer programs for
detecting and correcting spelling errors".**

**IBM TECHNICAL DISCLOSURE BULLETIN, Vol.
24, no. 10, March 1982, pages 5003-5008, New
York (US), ADAM et al.: "Spelling processing
functions operator interface"**

(73) Proprietor: **International Business Machines
Corporation
Old Orchard Road
Armonk, N.Y. 10504 (US)**

(72) Inventor: **Heard, Roderick Stacey
2105 Bridgeport Drive
Lexington Kentucky 40502 (US)**
Inventor: **Tremoulet, Joseph, Charles
1928 Mint Julep Lane
Lexington Kentucky 40503 (US)**

(74) Representative: **Siccardi, Louis
Compagnie IBM France Département de
Propriété Intellectuelle
F-06610 La Gaude (FR)**

(56) References cited:
**IBM TECHNICAL DISCLOSURE BULLETIN, Vol.
23, no. 8, January 1981, pages 3897-3898), New
York (US) TUFFILL et al.: "Processing text files
using a dictionary"**

**IBM TECHNICAL DISCLOSURE BULLETIN, Vol.
23, no. 10, March 1981, page 4818, New York
(US), HAMILTON et al.: "Document
supplement for spelling verification".**

## Description

Technical Field

The present invention relates to word processing and, more particularly, to a spelling verification method and to a typewriter embodying said method.

Background of the Invention

With the increased use of word processing and electronic typewriting, the age old problem of detecting and correcting typographical or spelling errors in text being keyed into the word processing or typing devices can be more efficiently handled with the increased capability of electronics. The correcting of spelling errors necessitates delays, retyping and corrections and hinders timely completion of typing and word processing work.

Spelling verification features, programs and capabilities or systems known as dictionaries for spelling verification are available on computer systems which are typically used in a word processing environment and on dedicated word processing systems. The number of words stored in a particular data base or dictionary vary in size with the design of the particular system. In many cases, the vocabulary or the dictionary contents are fixed by the provider of the system or the program while, in some cases, the operator may supplement the system with designated words of a particular importance to that operator.

For example, a medical typist would have need for medically related terms in the dictionary while an engineer or scientist would use technical terms of a different nature and would find medical terms of no use.

Words of highly repetitive use or of a particularly trouble-some nature can be selectively stored by the operator as part of the spelling verification systems used on word processing devices.

Documents having related subject matter include:

US—A—3,995,254 entitled "Digital Reference Matrix for Word Verification".

US—A—4,342,085 entitled "Stem Processing for Data Reduction in a Dictionary Storage File".

US—A—4,136,395 entitled "System for Automatically Proofreading a Document".

The systems disclosed in the above documents compare the word typed and stored in the memory with the words of the dictionary of the vocabulary to determine whether a compare exists in the dictionary. This comparison is typically performed on each and every word in the document after the document has been completely typed and the spelling verification routine has either been accessed or loaded into the word processing system and the spelling verification routine commanded. The comparison continues until the document has been completely compared on a word for word basis and then the words of questionable spelling are displayed or highlighted. Any word which cannot be verified by a comparison in the dictionary is indicated as a questionable spelling through highlighting or underscoring or other visual attention securing technique to allow the operator to determine whether the word is properly or improperly spelled. After the operator has had the opportunity to review the questionable spellings, the operator may indicate that a word is properly spelled and no further action will be taken or the operator may indicate by rekeying that a word is improperly spelled at which point correction will occur and the comparison may, if desired, be accomplished again.

The technique in general described above is available on personal computers which are capable of being programmed to handle word processing tasks and which are provided with programs which perform the spelling verification checks on documents stored in the storage of the personal computer.

In addition, some word processing systems, such as the IBM Displaywriter manufactured and sold by the IBM Corporation, have available a spelling verification feature which compares the words stored in their text memory with the words of a fixed dictionary and also with the words of a variable dictionary. Additional unique operator selected words may be added by the operator to the variable dictionary, if desired. The updating of the variable dictionary is thus not carried out automatically by the system.

A system including a variable dictionary is also disclosed in the article published in "Communications of the ACM, Vol. 23, No. 12, December 1980, pages 676—687". The system described therein has the further capability of checking the spelling of each word as soon as it is keyboarded by the operator, instead of processing the keyboarded words on a batch basis, as the above discussed systems do. However, the automatic updating of the variable dictionary with words not known to the system, and identified during text typing, is still not provided by the system of that article, inasmuch as it is only capable of adding automatically to the variable dictionary the words which, during typing of a specific text, are found to already exist in the fixed dictionary. Accordingly, although making use of large memories, that system is not capable of automatically updating its variable dictionary with the words which are inputted for the first time to the system and thus requires the intervention of the operator if it is desired to have the newly inputted words available for checking the spelling of subsequent occurrences thereof.

A system having the capability of checking the spelling of a word as soon as it is typed, instead of processing the words on a batch basis after typing of an entire document, is also disclosed in GB—A—1,572,509. The latter system, however, has a single dictionary of all words required in a given field. No variable dictionary is provided, and thus, the problem of the updating of such a dictionary is foreign to this document.

Typewriters by their very nature of printing the document as the keys are depressed by the operator do not provide an opportunity to review the entire document and to, through highlighting or other visual indication, indicate potentially misspelled words for the operator. Typewriters also don't have loading capability for loading supplemental dictionary and thus fixed dictionaries would be the only dictionary available on a traditional typewriter without magnetic media.

Objects of the Invention

It is an object of the invention to update the stored vocabulary in the dictionary in a variable storage as the operator keyboards the input.

It is another object of the invention to retain in the most easily accessible portion and most rapidly accessed segment of the variable storage the most repetitively used words.

It is still another object of the invention to provide an interactive concurrent feedback to the operator indicating a non-match condition so that the operator may consider correcting the word while still on the same typing line or within a reasonably easily accessible displacement from the word being verified.

It is still another object of the invention to provide for spelling verification on a typewriter.

Summary of the Invention

The spelling verification method, in accordance with the invention, is of the type comprising the steps of:

providing a string of data signals representing characters forming a complete word;

providing a stored library of selected groups of data codes representing a first group of words;

providing a memory for receiving and storing groups of data codes representing a second group of words;

comparing said string of data signals representing said complete word with said groups of data codes representing said first group of words to determine the existence of a match with any of said first group of words;

comparing said string of data signals representing said complete word with said groups of data codes stored in said memory to determine the existence of a match with any of said second group of words;

operating an alarm if no match exists in said first or second groups of words to alert an operator to a condition of no match.

The method of the invention is characterized in that it includes the further step of:

storing in said memory said string of data signals representing said complete word, in response to the entry by the operator of the next complete word while a condition of no match exists.

The typewriter with spelling verification feature of the invention is of the type comprising a keyboard, a printer means for displaying visually discernible characters, means for controlling said keyboard operations, means for controlling said printer operations, said means for controlling said keyboard operations and said means for controlling said printer operations being interconnected, means for verifying the spelling of words represented by data codes processed by said means for controlling said keyboard, through comparison with a predetermined data bank of data codes.

The typewriter of the invention is characterized in that said means for verifying the spelling of words represented by data codes processed by said means for controlling said keyboard have associated with them:

a first memory means for accumulating codes representing a word typed on said keyboard, means for comparing the codes accumulated in said first memory means with said codes in said data bank,

means, responsive to said comparing means, for the immediate alerting of the operator if a non-match condition exists between said codes in said first memory means and said codes in said data bank,

a second memory means to which the data codes accumulated in said first memory means are transferred if the said non-match condition exists, said second memory means storing said codes until such time as at least one additional complete word is typed on said keyboard and stored in said first memory means,

a third memory means, containing a variable dictionary, to which the data codes stored in said second memory means are transferred for storage upon the typing of at least one complete additional word.

Drawings

Fig. 1 illustrates a typewriter having a processor for controlling the printing functions and character selection as well as a keyboard processor and a separate spelling verification processor for handling the spelling verification work.

Fig. 2 is a representation of the spelling verification processor together with the associated memory available to it which includes within that memory the present word register, prior word register, main and supplemental dictionaries and operational code.

Fig. 3a and 3b are the flow diagrams illustrating the functional sequence that occurs as keyboarded characters are provided from the keyboard to the spelling verification processor and the printer processor.

Fig. 4 illustrates the routine flow for cascading stored words downward in the memory and inserting the most recently compared word in the highest position in the memory if found in the supplemental dictionary.

Fig. 5 is an expansion of the routine of block 120 in Fig. 3b.

Detailed Description of the Invention

This invention is implemented in an electronic typewriter 10 which has electronically associated with it a keyboard electronics with a channel of communication between the keyboard 14 and the keyboard electronics 12. Keyboard electronics 12 will provide output signals and may receive feedback signals from the printer processor 15. Tapped into the lines interconnecting keyboard electronics 12 and the printer processor 15 is a connection to the spelling verification processor 16. Spelling verification processor 16 also provides a command line to the indicator panel 18. Printer processor 15 provides a two-way communication path between the processor 15 and the printer portion 20 of typewriter 10.

The connection of the spelling verification processor 16 may be moved, with only minor modification, to a point between the printer processor 15 and the typewriter 10. The changes would involve the coded data available to the spelling verification processor in that the printer processor 15 outputs signals representing characters in a different form from the keyboard electronics output signals. These connections only need to intercept the data flow at any point between the keyboard and printer.

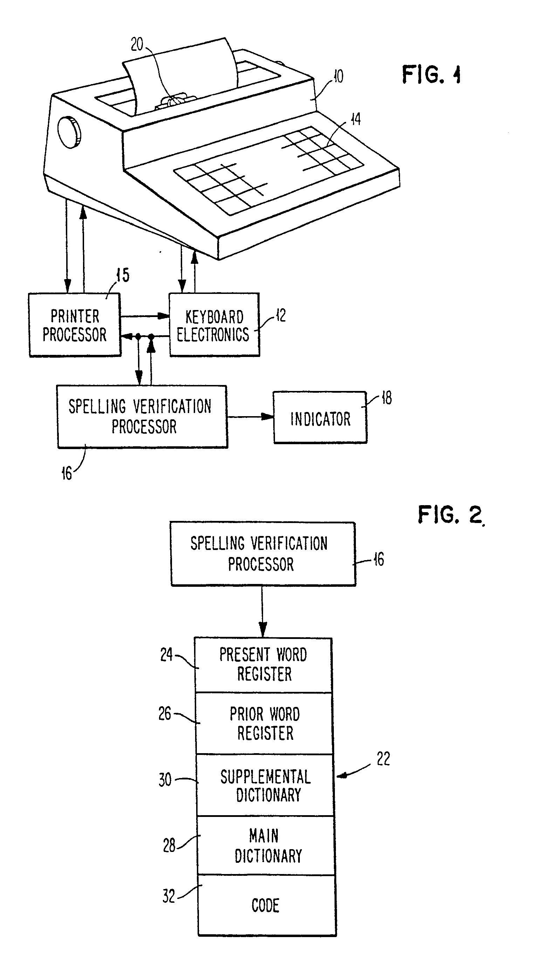

Referring to Fig. 2, the spelling verification processor 16 has associated with it a memory 22. The memory 22 is divided into several segments. The segments which are directly related to the spelling verification capability include the present word register 24, the prior word register 26, the main dictionary 28, supplemental dictionary 30 and the code segment 32. The present word register 24 is the register in which letters and character codes are accumulated as keyboarded by the operator on the keyboard 14 and processed by the keyboard processor 12. The prior word register 26 contains the delimited character string defined as the prior word and is a temporary storage location.

The main dictionary 28 is a segment of memory 22 which is loaded with the code representing approximately 50,000 words. The vocabulary stored in the main dictionary 28 is stored in a fixed manner and, therefore, is not subject to change by operator action.

The supplemental dictionary 30 is a segment of memory 22 available for the temporary and operator-controlled storage of words which are not found in the main dictionary 28.

Code section 32 is the portion of the memory 22 dedicated to the storage of the operation codes and required data, such as, by way of example, those which control the function of the spelling verification processor and the movement of information and data into and out of the other memory sections as well as the operation of the indicators on the indicator panel 18.

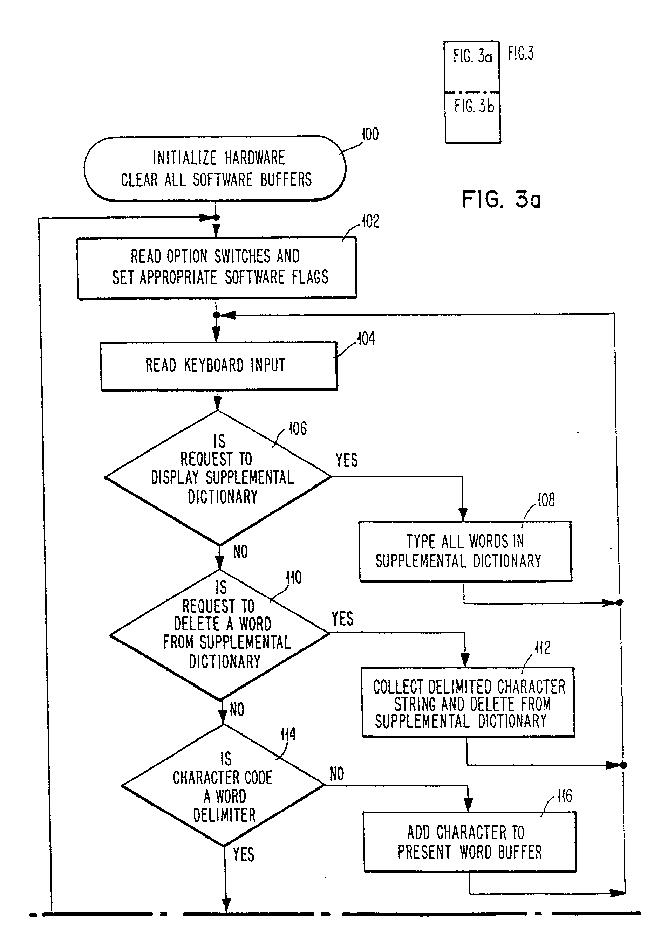

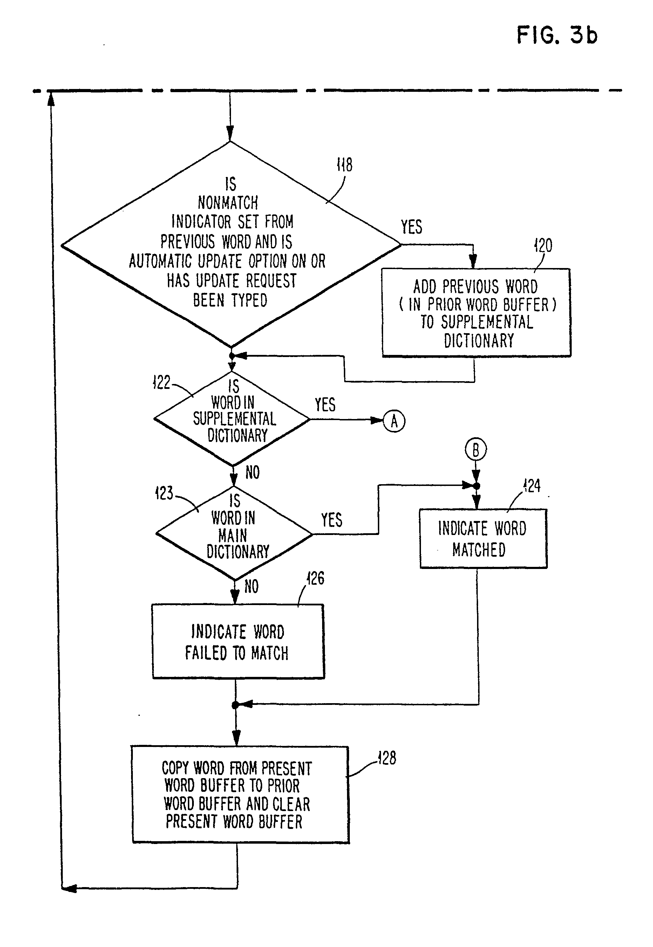

Referring to Fig. 3, the flow diagram illustrates the operation of the spelling verification feature on an electronic typewriter. The other features and operations of the electronic typewriter are not illustrated inasmuch as they are not part of this invention and they only provide a basis upon which the spelling verification feature is added to improve the typewriter.

With the initiating of machine operation in the conventional manner by turning on typewriter 10, the spelling verification processor 16 will initialize with a standard power on reset sequence and, at the same time, will clear all of the registers or software buffers in the processor which may contain flags or indicators from a previous machine operation (block 100).

After the initialization routine (block 100), the spelling verification processor 16 will then determine by checking the different switches to determine which of the options have been selected by the operator.

The operator may turn the spelling verification feature on or off and assuming that the operator elects to have the feature on, may elect further to automatically update the supplementary dictionary 30 or the operator may update the supplemental dictionary 30 on a word-by-word selective basis. Further, the operator may delete words from the supplemental dictionary 30 should it be desirable to remove a word which may have inadvertently been placed in the supplemental dictionary 30 and proven later to be erroneously spelled. Additionally, the operator may command that all words in the supplemental dictionary be printed.

Upon the completion of the reading of the option switches which may take the form of physical switches or may take the form of electronic commands which have been keyed into the keyboard such as the depression of the code key plus a character key, the routine flows from block 102 to the read keyboard input routine in block 104. In the read keyboard input routine in block 104, the keyboard output is converted to a code which may be used by the spelling verification processor 16 for its purposes.

Upon the completion of the read keyboard input (block 104), the flow will be to block 106 where the decision is made as to whether the keyboard input is a request to display the contents of the supplemental dictionary 30. In the event that the request is to display the contents, then the "YES" branch flows to block 108 and initiates a typing action to type out on display all words contained in the supplemental dictionary and the flow then branches back to above block 104.

If the keyboard input is not a request to display the contents of supplemental dictionary 30, the flow through the "NO" path will be to block 110 where a decision will be made as to whether the request is to delete a word from the supplemental dictionary 30. If the request is to delete a word from the supplemental dictionary 30, the flow will be to the routine in block 112 where a fully delimited character string is collected and the deletion of that identical character string from the supplemental dictionary is accomplished. Thereupon, the flow will return to block 104 for further reading of the keyboard inputs.

If the last decision regarding whether the keyboard input is a request to delete a word from the supplemental dictionary 30 (block 110) is in fact "No", then the decision is made in block 114 as to whether the character is a word delimiter. If the character is not in the set of codes designated as word delimiters, then that character is added to the present word buffer in block 116 and the flow returns to just prior to block 104 and further keyboard inputs are read.

If the keyboard input which is read in block 104 is not a request to either display the contents of supplemental dictionary 30 or to delete a word from the supplemental dictionary 30 as in blocks 106 or 110, respectively, and the character is a word delimiter, then the flow is directed to block 118 where a determination is made as to whether the non-match indicator is set from the previous word and is the automatic update option on or has the update request been typed by the operator.

If the non-match indicator for the previous word is set (block 118), this indicates that the previous word was not found in either the main or supplemental dictionaries 28, 30 and assuming one form or another of the update has been actuated, then the previous word is added to the supplemental dictionary 30 (block 120). If either the non-match indicator is not set indicating that a match was found for the previous word or the update options have not been activated or turned on, then the flow continues and the present word is compared with contents of the dictionaries in a two-step search where the supplemental dictionary 30 of specially added words is searched and then the main dictionary 28 of the most commonly used words is searched. This occurs in blocks 122 and 123. If the word is found in either dictionary 28, 30, then in accordance with the flow to block 124, there is an indication that the word matches. This may be accomplished in a multitude of ways, such as suppressing any alarms or turning off any word in error light which may have been previously illuminated for the preceding word.

If the word is not found in either the main dictionary or the supplemental dictionary (block 122), the "NO" path of the flow will lead to block 126 where a decision is made and a routine executed to indicate that the word failed to match any word in the two dictionaries 28, 30. At that time, the indicators are activated to indicate a non-match condition or word not found condition such as turning on a light or sounding an audible alarm. The form of the operator attention-getting alarm whether visual or audio is immaterial with respect to the implementation of the invention. The important part is that some attention-getting mechanism be activated to cause the operator to recognize the fact that the present word has not been found in the dictionary and needs operator verification for correct spelling.

The indicator 18 may also have an "error in line" light so that the operator is aware of an error if the next word is keyed and delimited before the word error is detected. In such case, it may be desirable to modify the routine to only update the supplemental dictionary with new words upon a carrier return command or line ending command.

In addition, in block 126 a flag or an indicator is set indicating that the word failed to match, and this indicator is then checked in decision block 118 upon the next pass through the flow. In this way, the contents of the word in the prior word buffer 26 at that time will be transmitted into and stored in the supplemental dictionary 30 if the operator has elected to either automatically update the supplemental dictionary 30 or has indicated by keyboard input that the word is to be used as an update on a selective basis for the supplemental dictionary 30.

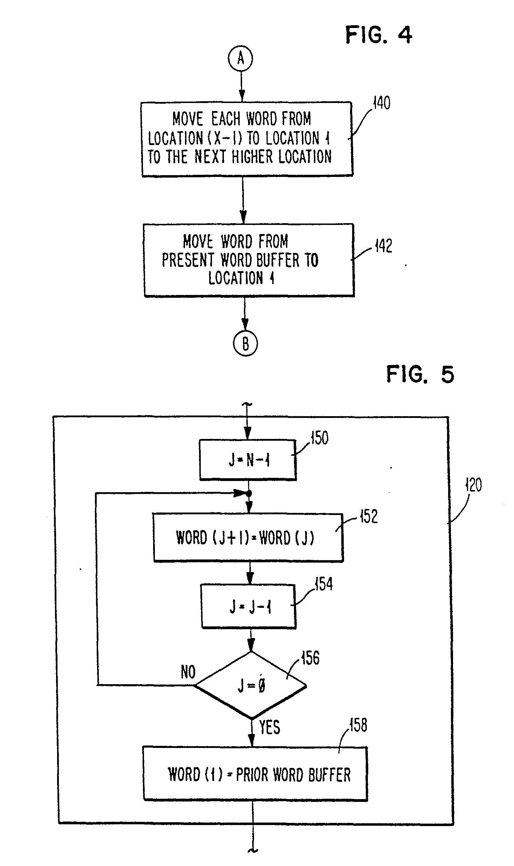

Referring to Fig. 4, the routine illustrated therein allows a word which has been found in the supplemental dictionary to be maintained at or near the top of the supplemental dictionary while less frequently used words are shifted to the bottom and thus are available for automatic elimination from the supplemental dictionary. Other entry points may be used and the word may be moved toward other locations if desired.

The routine illustrated in Fig. 4 is a result of branching from blcok 122 in Fig. 3b wherein the decision was made that the word was, in fact, found in the supplemental dictionary. Upon such a determination, the word location in the supplemental dictionary is determined and noted. If that location is designated as location X wherein X is between 1 and N, N being the largest number of word storage positions available in the memory, and 1 being the most recently stored word location, then the word stored in position X-1 is moved to location X and a similar shifting of each word above the X-1 position is accomplished to cascade the words in storage downward leaving the location 1 available. This procedure is illustrated in block 140.

Upon the completion of the cascading of the previously stored word downward, the word in the present word buffer is then stored in supplemental memory location 1 (block 142).

Thereupon, the flow returns to block 124 at point B as illustrated in Fig. 3b.

Fig. 5 illustrates a further amplification of block 120. In order to add words to the supplemental dictionary when the supplemental dictionary is full, it is necessary to remove a word from the supplemental dictionary and to replace it with the new word. When adding a word to the supplemental dictionary, it is desirable to add it at the top of the stack and to cascade words previously stored in the supplemental dictionary down by one word storage location such that the least recently used word is removed from the supplemental dictionary 30 and eliminated entirely from the system when the supplemental dictionary is full.

In block 150, J, a temporary counter value is assigned to the word position N-1 where N is the maximum number of words contained in the supplemental register.

With the word in storage location N-1 now designated as word J, word J is now moved to word J + 1 position in block 152. Thereupon, J is decremented by one and the procedure repeated until all words have been cascaded downward by one storage position. At which point, then J will be equal to zero and the procedure branches such that the word in the prior word buffer is moved to word storage position 1 in the supplemental dictionary.

The routine in Fig. 4 when used with the routine in Fig. 5 has the effect of deleting the least frequently used word and storing the most recently used word on the top of the stack to insure maximum retention of frequently used words.

The techniques with which the characters and words, word stems, prefixes and suffixes are stored in the code and accessed by the spelling verification microprocessor are not key elements of this invention and have been substantially implemented in the IBM Displaywriter which is available for purchase from the IBM Corporation, Armonk, New York.

The IBM Displaywriter performs the functions and comparisons on a strictly batch processing basis after the entire document has been stored in memory and a separate spelling verification program loaded and operated with respect to that particular document.

The above-disclosed device is an improvement thereon which allows the implementation of spelling verification system in an interactive mode on a typewriter such that the operator gets immediate feedback and the opportunity to correct errors immediately without waiting until the entire document is completely typed.

It is impractical from a typewriter operator standpoint to wait for the entire document to be recorded inasmuch as some electronic typewriters have very limited text memory and, therefore, the text would not be available for playout after correction.

This system may be implemented by programming code using an Intel 8086 or Intel 8088 microprocessor. Both of the Intel 8086 and 8088 microprocessors are capable of handling the same code generally and, therefore, in that respect are interchangeable.

The implementation of this system will, of course, depend to a great extent upon what processor is selected by the implementer and it should not be considered that the Intel 8086/8088 microprocessors are the only microprocessors which would be useable in this implementation.

Those skilled in the art will understand that the system of the invention may also be implemented by logic circuitry.

Useable electronic typewriters are available on the market. For example, IBM Model 50, IBM Model 60 and IBM Model 75 Electronic Typewriters may be utilized together with a spelling verification processor to add this function thereto if so desired.

Should other typewriters be utilized, it will be necessary for the implementer to modify some of the techniques to accommodate the basic hardware or software features upon which the feature will be implemented.

## Claims

1. A spelling verification method of the type comprising the steps of:

providing a string of data signals representing characters forming a complete word;

providing a stored library (28) of selected groups of data codes representing a first group of words;

providing a memory (30) for receiving and storing groups of data codes representing a second group of words;

comparing said string of data signals representing said complete word with said groups of data codes representing said first group of words to determine the existence of a match with any of said first group of words;

comparing said string of data signals representing said complete word with said groups of data codes stored in said memory (30) to determine the existence of a match with any of said second group of words;

operating an alarm (18) if no match exists in said first or second groups of words to alert an operator to a condition of no match;

said method being characterized in that it includes the further step of:

storing in said memory (30) said string of data signals representing said complete word, in response to the entry by the operator of the next complete word while a condition of no match exists.

2. The method of claim 1 further comprising the step of:

deleting a group of data codes representing one of the words of said second group from said memory (30) to provide room for said complete word.

3. The method of claim 1 or 2, wherein said step of operating an alarm (18) comprises illuminating an optical attention-getting device.

4. A typewriter (10) of the type comprising a keyboard (14), a printer means (20) for displaying visually discernible characters, means (12) for controlling said keyboard operations, means (15) for controlling said printer operations, said means (12) for controlling said keyboard operations and said means (15) for controlling said printer operations being interconnected, means (16) for verifying the spelling of words represented by data codes processed by said means (12) for controlling said keyboard, through comparison with a predetermined data bank (28, 30) of data codes, said typewriter being characterized in that said means (16) for verifying the spelling of words represented by data codes processed by said means (12) for controlling said keyboard have associated with them:

a first memory means (24) for accumulating codes representing a word typed on said keyboard (14),

means for comparing the codes accumulated in said first memory means (24) with said codes in said data bank (28, 30),

means (18), responsive to said comparing

means, for the immediate alerting of the operator if a non-match condition exists between said codes in said first memory means (24) and said codes in said data bank (28, 30),

a second memory means (26) to which the data codes accumulated in said first memory means (24) are transferred if the said non-match condition exists, said second memory means (26) storing said codes until such time as at least one additional complete word is typed on said keyboard and stored in said first memory means (24),

a third memory means (30), containing a variable dictionary, to which the data codes stored in said second memory means (26) are transferred for storage upon the typing of at least one complete additional word.

5. The typewriter of claim 4 wherein said second memory means (26) comprises a storage for plural words until a line ending command has been typed.

6. The typewriter of claim 5 wherein said alerting means (18) comprise indicator means for indicating the occurrence of a non-match condition within a particular line of typing.

7. The typewriter of any one of the preceding claims comprising means (16) for storing in said third memory means (30) said words in a predetermined sequence.

8. The typewriter of claim 7 wherein said means (16) for storing in said third memory means (30) inserts the last verified word in a predetermined storage position in said third memory means (30).

**Patentansprüche**

1. Rechtschreibüberprüfungsverfahren vom Typ mit folgenden Schritten:

Bereitstellung einer Kette von Datensignalen, welche Zeichen darstellen, die ein komplettes Wort bilden;

Bereitstellung einer gespeicherten Sammlung (28) ausgewählter Gruppen von Datencodes, die eine erste Wortgruppe darstellen;

Bereitstellung eines Speichers (30) für die Aufnahme und Speicherung von Gruppen von Datencodes, die eine zweite Wortgruppe darstellen,

Vergleich der besagten Ketten von Datensignalen, welche besagte komplette Wörter darstellen, mit besagten Gruppen von Datencodes, welche besagte erste Gruppe von Wörtern darstellen, um das Vorhandensein einer Übereinstimmung mit einem Wort aus der besagten ersten Wortgruppe zu ermitteln,

Vergleich der besagten Datensignalkette, welche besagtes komplettes Wort darstellt, mit besagten Datencodegruppen, die in besagtem Speicher (30) gespeichert sind, um das Vorhandensein einer Übereinstimmung mit einem Wort aus der besagten zweiten Wortgruppe zu ermitteln,

Ausgabe einer Meldung (18), wenn in der besagten ersten oder zweiten Wortgruppe keine Übereinstimmung vorhanden ist, um den Bediener auf das Fehlen einer Übereinstimmung hinzuweisen,

besagtes Verfahren dadurch gekennzeichnet ist, dass es ausserdem folgenden Schritt enthält:

Speicherung, im besagten Speicher (30), der besagten Datensignalkette, die das besagte komplette Wort darstellt, in Antwort auf die Eingabe des nächsten kompletten Wortes durch den Bediener, wenn keine Übereinstimmung vorhanden ist.

2. Verfahren gemäss Anspruch 1, ferner folgenden Schritt enthaltend:

Löschung einer Gruppe von Datencodes, welche eines der Wörter der besagten zweiten Gruppe darstellt, aus dem besagten Speicher (30), um Platz für das besagte vollständige Wort zu machen.

3. Verfahren gemäss Anspruch 1 oder 2, in dem der besagte Schritt der Ausgabe einer Meldung (18) das Aufleuchten einer optischen Warnvorrichtung enthält.

4. Schreibmaschine (10) vom Typ mit Tastatur (14), Druckmittel (20) für die Anzeige visuell erkennbarer Schriftzeichen, Mittel (12) für die Steuerung der besagten Tastaturvorgänge, Mittel (15) für die Steuerung der besagten Druckervorgänge, wobei besagte Mittel (12) für die Steuerung der besagten Tastaturvorgänge und besagte Mittel (15) für die Steuerung der besagten Druckervorgänge miteinander verbunden sind, Mittel (16) für die Überprüfung der Rechtschreibung von Wörtern, welche durch die mit besagten Mitteln (12) für die Steuerung der besagten Tastatur verarbeiteten Datencodes dargestellt werden, durch Vergleich mit einer vorgegebenen Datenbank (28, 30) von Datencodes, wobei besagte Schreibmaschine dadurch gekennzeichnet ist, dass den besagten Mitteln (16) für die Überprüfung der Rechtschreibung der Wörter, welche durch die mit besagten Mitteln (12) für die Steuerung der besagten Tastatur verarbeiteten Datencodes dargestellt sind, folgende Mittel zugeordnet sind:

ein erstes Speichermittel (24) für die Ansammlung von Codes, welche ein auf besagter Tastatur (14) eingegebenes Wort darstellen,

Mittel zum Vergleich der in besagtem ersten Speichermittel (24) angesammelten Codes mit besagten Codes in der besagten Datenbank (28, 30),

Mittel (18), welche auf die besagten Vergleichsmittel ansprechen, um den Bediener sofort aufmerksam zu machen, wenn eine Nichtübereinstimmung zwischen besagten Codes in den besagten ersten Speichermitteln (24) und besagten Codes in der besagten Datenbank (28, 30) auftritt,

ein zweites Speichermittel (26), in das die im besagten ersten Speicher (24) angesammelten Datencodes übertragen werden, wenn die Nichtübereinstimmung auftritt, wobei besagte Speichermittel (26) besagte Speichercodes so lang speichern, bis mindestens ein zusätzliches komplettes Wort auf besagte Tastatur getippt und in besagtem ersten Speicher (24) abgespeichert wird,

ein drittes Speichermittel (30), das ein veränderliches Wörterbuch enthält, in das die in besagtem zweiten Speichermittel (26) abgelegten Datencodes zum Speichern übertragen werden, nach dem Schreiben von mindestens einem kompletten zusätzlichen Wort.

5. Schreibmaschine nach Anspruch 4, in dem der besagte zweite Speicher (26) eine Speicherung für mehrere Wörter enthält, bis ein Zeilenabschlussbefehl eingegeben wird.

6. Schreibmaschine gemäss Anspruch 5, in der besagte Warnmittel (18) Anzeigemittel enthalten, die das Auftreten einer Nichtübereinstimmung in einer besonderen Schreibzeile angeben.

7. Schreibmaschine gemäss einem der vorangehenden Ansprüche mit Mitteln (16) zum Abspeichern der besagten Wörter in einer vorgegebenen Sequenz in besagtem dritten Speicher (30).

8. Schreibmaschine gemäss Anspruch 7, in der besagte Mittel (16) zum Ablegen im dritten Speicher (30) mindestens das letzte überprüfte Wort in eine vorgegebene Speicherposition im besagten dritten Speicher (30) einfügen.

## Revendications

1. Une méthode de vérification d'orthographe du type comprenant les étapes suivantes:

la fourniture d'une série de signaux de données représentant des caractères formant un mot complet,

la fourniture d'une mémoire (30) pour recevoir et emmagasiner des groupes de codes de données représentant un second groupe de mots,

la comparaison de ladite série de signaux de données représentant ledit mot complet auxdits groupes de codes de données représentant ledit premier groupe de mots pour déterminer l'existence d'une correspondance avec l'un quelconque dudit premier groupe de mots,

la comparaison de ladite série de signaux de données représentant ledit mot complet auxdits groupes de codes de données emmagasinés dans ladite mémoire (30) pour déterminer l'existence d'une correspondance avec l'un quelconque dudit second groupe de mots,

l'actionnement d'une alarme (18) si aucune correspondance n'existe dans ledit premier ou second groupe de mots pour attirer l'attention de l'opérateur sur un état d'absence de correspondance,

ladite méthode étant caractérisée en ce qu'elle comprend l'étape supplémentaire suivante:

l'emmagasinage dans ladite mémoire (30) de ladite série de signaux de données représentant ledit mot complet en réponse à l'entrée par l'opérateur du mot complet suivant pendant une condition d'absence de correspondance.

2. La méthode de la revendication 1 comprenant en outre l'étape suivante:

la suppression d'un groupe de codes de données représentant l'un des mots dudit second groupe de ladite mémoire (30) pour laisser la place audit mot complet.

3. La méthode de la revendication 1 ou 2 dans laquelle ladite étape d'actionnement d'une alarme (18) comprend l'éclairage d'un dispositif optique attirant l'attention de l'opérateur.

4. Une machine à écrire (10) du type comprenant un clavier (14), un moyen d'impression (20) pour afficher des caractères visibles, des moyens (12) pour commander les fonctionnements dudit clavier, des moyens (15) pour commander les fonctionnements dudit moyen d'impression, lesdits moyens (12) pour commander les fonctionnements dudit clavier et lesdits moyens (15) pour commander les fonctionnements dudit moyen d'impression étant interconnectés, des moyens (16) pour vérifier l'orthographe des mots représentés par des codes de données traités par lesdits moyens (12) pour commander ledit clavier par l'intermédiaire d'une comparaison avec une banque de données prédéterminée (28, 30) de codes de données, ladite machine à écrire étant caractérisée en ce que lesdits moyens (16) pour vérifier l'orthographe des mots représentés par des codes de données traités par lesdits moyens (12) pour commander ledit clavier sont associés à:

un premier moyen à mémoire (24) pour accumuler des codes représentant un mot entré par l'intermédiaire dudit clavier (14),

des moyens pour comparer les codes accumulés dans ledit premier moyen à mémoire (24) auxdits codes dans ladite banque de données (28, 30),

des moyens (18) répondant auxdits moyens de comparaison pour alerter immédiatement l'opérateur si une condition de non-correspondance existe entre lesdits codes dans ledit premier moyen à mémoire (24) et lesdits codes dans ladite banque de données (28, 30),

un second moyen à mémoire (26) dans lequel les codes de données accumulés dans ledit premier moyen à mémoire (24) sont transferrés si ladite condition de non-correspondance existe, ledit second moyen à mémoire (26) emmagasinant lesdits codes jusqu'au moment où au moins un mot complet supplémentaire est entré par l'intermédiaire dudit clavier et emmagasiné dans ledit premier moyen à mémoire (24),

un troisième moyen à mémoire (30) contenant un dictionnaire variable dans lequel les codes de données emmagasinés dans ledit second moyen à mémoire (26), sont transferrés pour emmagasinage lors de l'entrée au clavier d'au moins un mot supplémentaire complet.

5. La machine à écrire de la revendication 4 dans laquelle ledit second moyen à mémoire (26) comprend une mémoire pour plusieurs mots jusqu'à ce qu'un signal de commande de fin de ligne ait été entré au clavier.

6. La machine à écrire de la revendication 5 dans laquelle lesdits moyens d'alerte (18) comprennent des moyens d'indication pour indiquer l'apparition d'une condition de non-correspondance dans une ligne d'impression particulière.

7. La machine à écrire de l'une quelconque des revendications précédentes comprenant des moyens (16) pour emmagasiner dans ledit troisième moyen à mémoire (30) lesdits mots dans une séquence prédéterminée.

8. La machine à écrire de la revendication 7 dans laquelle lesdits moyens (16) pour emmagasiner dans ledit troisième moyen à mémoire (30) introduisent le dernier mot vérifié à un emplacement de mémoire prédéterminé dans ledit troisième moyen à mémoire (30).

FIG. 1

FIG. 2

1

FIG. 3a | FIG.3

FIG. 3b

## FIG. 3a

INITIALIZE HARDWARE
CLEAR ALL SOFTWARE BUFFERS — 100

READ OPTION SWITCHES AND
SET APPROPRIATE SOFTWARE FLAGS — 102

READ KEYBOARD INPUT — 104

IS REQUEST TO DISPLAY SUPPLEMENTAL DICTIONARY — 106

YES →

TYPE ALL WORDS IN SUPPLEMENTAL DICTIONARY — 108

NO

IS REQUEST TO DELETE A WORD FROM SUPPLEMENTAL DICTIONARY — 110

YES →

COLLECT DELIMITED CHARACTER STRING AND DELETE FROM SUPPLEMENTAL DICTIONARY — 112

NO

IS CHARACTER CODE A WORD DELIMITER — 114

NO →

ADD CHARACTER TO PRESENT WORD BUFFER — 116

YES

FIG. 3b

IS NONMATCH INDICATOR SET FROM PREVIOUS WORD AND IS AUTOMATIC UPDATE OPTION ON OR HAS UPDATE REQUEST BEEN TYPED — 118

YES → 120 — ADD PREVIOUS WORD ( IN PRIOR WORD BUFFER ) TO SUPPLEMENTAL DICTIONARY

122 — IS WORD IN SUPPLEMENTAL DICTIONARY

YES → (A)

NO

(B)

123 — IS WORD IN MAIN DICTIONARY

YES → 124 — INDICATE WORD MATCHED

NO → 126 — INDICATE WORD FAILED TO MATCH

128 — COPY WORD FROM PRESENT WORD BUFFER TO PRIOR WORD BUFFER AND CLEAR PRESENT WORD BUFFER

3

## FIG. 4

(A)

MOVE EACH WORD FROM
LOCATION (X-1) TO LOCATION 1
TO THE NEXT HIGHER LOCATION
— 140

MOVE WORD FROM
PRESENT WORD BUFFER TO
LOCATION 1
— 142

(B)

## FIG. 5

$J = N-1$ — 150

$WORD(J+1) = WORD(J)$ — 152

$J = J-1$ — 154

$J = \emptyset$ — 156
NO
YES

$WORD(1) = PRIOR WORD BUFFER$ — 158

120